# NEUE EUROPÄISCHE PATENTSCHRIFT

(11) **EP 0 393 315 B2**
(45) Veröffentlichungstag und Bekanntmachung des Hinweises auf die Entscheidung über den Einspruch: **28.04.1999**
(45) Hinweis auf die Patenterteilung: 01.06.1994
(21) Anmeldenummer: 90102361.4
(22) Anmeldetag: 07.02.1990
(51) Int. Cl.: B29C 45/00, B29C 45/17

(54) **Verfahren zum Spritzgiessen fluidgefüllter Kunststoffkörper und Vorrichtung zur Durchführung des Verfahrens**
Method for injection moulding fluid-filled plastic articles and apparatus for carrying out the method
Procédé pour mouler par injection des pièces en matière plastique remplies de liquide et appareil pour la réalisation du procédé

(30) Priorität: 21.04.1989 DE 3913109
(43) Veröffentlichungstag der Anmeldung: 24.10.1990
(73) Patentinhaber: Ferromatik Milacron Maschinenbau GmbH, D-79364 Malterdingen (DE)
(72) Erfinder: Jaroschek, Christoph, Dipl.-Ing., D-7834 Herbolzheim (DE)
(74) Vertreter: Röther, Peter, Dipl.-Phys.

(56) Entgegenhaltungen:
- EP-A- 0 289 230
- EP-A- 0 321 117
- EP-A- 0 424 435
- DE-A- 1 194 127
- DE-A- 2 159 344
- DE-B- 2 445 786
- DE-C- 2 800 482
- JP-A- 5 074 660
- Battenfeld Veröffentlichung "Spritzgiessen - Auf Kurs in die 90er Jahre", Dipl.-Ing. Helmut Eckardt:"Das Mehrkomponenten-Spritzgiessverfahren als Wettbewerb oder Ergänzung zum Kompaktspritzgiessen?", 10/1987

## Beschreibung

Die Erfindung betrifft ein Verfahren zum Spritzgießen gasgefüllter Kunststoffhohlkörper gemäß den Merkmalen der Patentansprüche 1 und 2 und Vorrichtungen zur Durchführung dieses Verfahrens gemäß den Merkmalen der Patentansprüche 10 und 11.

Ein Spritzgießverfahren mit unterstützender Gasinjektion ist bereits aus der DE-OS 21 06 546 bekannt, bei dem ein aus einem zweiteiligen, mit einem Ausstoßstempel versehenen Werkzeug gebildeter Formhohlraum für einen Schuhabsatz mittels einer an eine Spritzeinheit für eine fließfähige Kunststoffschmelze angeschlossenen Düse zunächst teilweise mit Kunststoffschmelze gefüllt wird, bevor mittels einer zweiten, separat von der ersten angeordneten Düse ein druckbeaufschlagtes Gas - vorzugsweise Druckluft - so in die plastische Seele des bereits im Formhohlraum befindlichen Kunststoffs eingeblasen wird, daß der Kunststoff allseitig und gleichmäßig an die Wände des Formhohlraums gedrückt wird. Die zweite Düse ist dabei in der sie tragenden Werkzeughälfte derart angeordnet, daß sie mit dieser starr verbunden ist, stets in Richtung der Öffnungs- und Schließbewegung des Werkzeugs weist und mit ihrer formhohlraumseitigen Ausgangsöffnung bei geschlossenem Werkzeug stets die plastische Seele des Kunststoffes erreicht. Beim Öffnen des Werkzeugs ermöglicht die von der zweiten Düse hinterlassene Öffnung im Schuhabsatz dann einen Druckausgleich zwischen Innen- und Außenraum des Schuhabsatzes. Ziel dieses Verfahrens war bereits damals wie heute und bei weiteren zwischenzeitlich entwickelten Verfahren derselben Gattung die Einsparung von Kunststoffmaterial einerseits und damit von Gewicht des Endproduktes andererseits, soweit dadurch keine Beeinträchtigung der Stabilität des Endproduktes zu erwarten war.

Ein weiteres Spritzgießverfahren mit unterstützender Gasinjektion wurde in der US-PS 4 101 617 offenbart, bei dem die fließfähige Kunststoffschmelze und ein druckbeaufschlagtes Gas, beispielsweise Luft, Kohlendioxid oder Stickstoff, mittels einer koaxialen Düsenkombination aus einer zentralen Düse mit kreisförmigem Querschnitt für das Gas und einer diese umschließenden Ringdüse für die fließfähige Kunststoffschmelze durch eine gemeinsame korrespondierende Öffnung im Werkzeug in den Formhohlraum eingebracht werden, wobei zunächst entweder nur ein Teil oder die Gesamtmenge des für das Endprodukt benötigten Kunststoffes und erst dann das Gas entweder gemeinsam mit dem Rest des benötigten Kunststoffes oder allein in den Formhohlraum eingespritzt wird. Das offenbarte Ergebnis entspricht demjenigen der vorgenannten DE-OS 21 06 546. Der Druckausgleich zwischen Innen- und Außenraum der erzeugten Kunststoffhohlkörper, beispielsweise Doppelfenster, durchsichtige Hohlziegel, doppelwandige Beleuchtungskörper und doppelwandige Oberlichter, erfolgt durch Zurückziehen der koaxialen Düsenkombination aus der Werkzeugöffnung vor dem Öffnen des Werkzeuges zur Entnahme des Endproduktes oder - sofern die Gaseintrittsöffnung des Hohlkörpers nach dessen Ausbildung und Erstarrung durch Nachdrücken einer pfropfenbildenden Menge von Kunststoff verschlossen wird - durch Anbohren oder Anstechen des fertigen Hohlkörpers nach dem teilweisen oder totalen Öffnen des Werkzeugs. Der Formhohlraum kann dabei entweder als während eines Spritzgießzyklus unveränderlich oder als während eines solchen Zyklus mittels mindestens eines geeigneten Hubstempels im Werkzeug variabel ausgebildet sein.

Ein ähnliches wie das vorgenannte Verfahren ist auch aus der DE-PS 28 00 482 bekannt, bei dem jedoch - als wesentlicher Unterschied - eine viskose Flüssigkeit anstelle eines Gases zum Erzeugen eines Hohlraums in einem Kunststoffhohlkörper verwendet wird.

Bekannt ist aus der GB-PS 2 139 548 auch ein Spritzgießverfahren mit unterstützender Gasinjektion, bei dem durch eine oder mehrere von der Düse zum Einspritzen der fließfähigen Kunststoffschmelze separierte Düse(n) eine Flüssigkeit oder ein Gas in den in den Formhohlraum einströmenden plastifizierten Kunststoff geblasen wird, wobei diese Düse(n) in den Angußkanal im Werkzeug und/oder auch an geeigneter/n Stelle(n) in den eigentlichen Formhohlraum mündet/n. Nach dem Erstarren des Kunststoffhohlkörpers im Formnohlraum und vor dem Öffnen des Werkzeugs wird auch hier ein Druckausgleich zwischen dem - gegebenenfalls aus mehreren einzelnen Zellen bestehenden - Innenraum dieses Kunststoffhohlkörpers und seinem Außenraum über die zunächst zum Einbringen der Flüssigkeit oder des Gases installierte(n) Düse(n) vorgenommen.

Wesentliche Merkmale aller dieser vorgenannten Verfahren sind die Tatsachen, daß in jedem Fall von vornherein nur soviel plastifizierter Kunststoff in den Formhohlraum eingegeben wird, wie zur endgültigen Ausbildung des Endprodukts erforderlich ist, und daß das Einblasen einer Flüssigkeit oder eines Gases, ob es nun gleichzeitig mit dem Einbringen der fließfähigen Kunststoffschmelze oder erst anschließend erfolgt, vorgenommen werden muß, solange die fließfähige Kunststoffschmelze allenfalls an den bereits von ihr berührten Teilen der Werkzeugoberfläche erste Erstarrungserscheinungen aufweist. Bei geometrisch einfachen Körpern führt dies offenbar nicht zu Schwierigkeiten bei der Herstellung von Endprodukten reproduzierbar gleichmäßiger Qualität. Bei geometrisch komplizierten Körpern mit unterschiedlichen Querschnittsflächen senkrecht zur Fließrichtung der fließfähigen Kunststoffschmelze im Formhohlraum, beispielsweise schon bei einer einseitig mit hohlen Verstärkungsrippen versehenen Platte, sind jedoch bei den vorgenannten Verfahren verschiedene Effekte zu erwarten, die einer Herstellung von Endprodukten reproduzierbar gleichmäßiger Qualität entgegenstehen.

So ist zunächst zwangsläufig zu erwarten, daß die fließfähige Kunststoffschmelze im Formhohlraum sowohl vor als auch während des Einblasens einer Flüssigkeit oder eines Gases in Bereichen größeren Querschnitts schneller fließt als in solchen geringeren Querschnittes, wobei dieser Effekt während des Einblasens einer Flüssigkeit oder eines Gases in verstärktem Maße auftritt. Damit läuft die fließfähige Kunststoffschmelze beim Einblasen einer Flüssigkeit oder eines Gases im allgemeinen jedoch in Bereichen größeren Querschnitts nicht nur vor, sondern gleichzeitig seitwärts in die benachbarten Bereiche geringeren Querschnitts, wobei im Extremfall beim Erreichen der Außenwand eine teilweise Umkehr der Fließrichtung der fließfähigen Kunststoffschmelze in Verbindung mit einem Durchbruch der Flüssigkeit oder des Gases durch die Außenhaut des Kunststoffhohlkörpers auftreten kann, in jedem Fall aber störende Fließmarkierungen auf der Oberfläche des Endproduktes erzeugt werden. Nur in ganz speziellen Einzelfällen läßt sich dies durch vorheriges Festlegen des Füllbildes, d.h. der zeitlichen Änderung des Verhaltens der Fließfront der fließfähigen Kunststoffschmelze, und dessen Berücksichtigung bei der Konstruktion des Werkzeugs und damit des Formhohlraums für das geometrisch kompliziert gestaltete Endprodukt vermeiden.

Bei einem Kunststoffhohlkörper mit weitgehend massivem Aufbau und nur wenigen, verhältnismäßig engen flüssigkeits- oder gasgefüllten Hohlräumen muß außerdem allein mittels des Druckes der Flüssigkeit oder des Gases in diesen Hohlräumen und des daraus zu verdrängenden plastischen Kunststoffmaterials ein solcher Druck bzw. Nachdruck im gesamten Formhohlraum erzeugt werden, daß der flüssigkeits- oder gasgefüllte Kunststoffhohlkörper nach dem Erstarren keinerlei Einfallstellen an seiner Oberfläche aufweist. Auch dies ist nur in speziellen Einzelfällen erreichbar, jedenfalls dann, wenn ein gleichzeitiges Durchbrechen der Flüssigkeit oder des Gases durch die Außenhaut des Endproduktes oder zumindest das Auftreten ungewollter Bauteilschwächungen vermieden werden soll.

Bei Endprodukten mit stark variierenden Querschnitten oder speziellen Formen wie beispielsweise gekrümmten Rohren ist darüber hinaus ebenfalls nur in Einzelfällen reproduzierbar vorherbestimmbar, welcher Temperaturgradient sich bei jedem einzelnen Spritzgießzyklus tatsächlich an einem bestimmten Querschnitt durch den Formhohlraum während der gemeinsamen Ausbildung der Wand des - noch fließfähigen - Kunststoffhohlkörpers und seines flüssigkeits- oder gasgefüllten Hohlraums einstellt, womit jedoch die tatsächliche Lage des Hohlraumquerschnitts im Körperquerschnitt, beispielsweise diejenige des Rohrinnenraums innerhalb des Rohrkörpers im Bereich einer Rohrkrümmung, vorgegeben wird, da die Längsachse eines in Rede stehenden Hohlraums im wesentlichen mit der Linie der jeweils höchsten Temperatur der fließfähigen Kunststoffschmelze in Fließrichtung übereinstimmt - soweit nicht auch noch zusätzliche Einflüsse von Reibung und Strömungsmechanik zu berücksichtigen sind. Ein mit einem der vorgenannten Verfahren hergestelltes gekrümmtes Rohr kann so beispielsweise in einem Querschnitt im Bereich der Rohrkrümmung von einem zum anderen Spritzgießzyklus unterschiedliche Lagen der Rohrinnenwand gegenüber der Rohrachse und der - zwangsläufig rotationssymmetrischen - Rohraußenwand und damit eine unterschiedliche Wandstärke bis zum Durchbruch auf dem Umfang des Rohres aufweisen.

Zur Überwindung der vorgenannten Schwierigkeiten wurde bereits seit längerer Zeit nach Möglichkeiten gesucht, die Herstellung kompliziert geformter oder sehr umfangreicher spritzgegossener Kunststoffhohlkörper mit fehlerfreiem inneren Aufbau und ungestörter Oberfläche auf andere Weise zu erreichen., So wurde zur Herstellung flächenmäßig ausgedehnter Kunststoffhohlkörper bereits in der DE-AS 24 45 786 ein Verfahren und eine zu seiner Durchführung geeignete Vorrichtung offenbart, die mittels mindestens zweier separat voneinander angeordneter Angußkanäle zunächst jeweils ein - qualitativ hochwertigeres - Hautmaterial und anschließend jeweils ein - preiswerteres - Kernmaterial solange in denselben - ausgedehnten - Formhohlraum einspritzt, bis die beiden Kernmaterial-Massen aufeinandertreffen und sich unter Verdrängung überschüssigen Hautmaterials in seitliche Abführkanäle zu einem homogenen Kern vereinigen. Dieses Verfahren und insbesondere die zu seiner Durchführung zu verwendende Vorrichtung ist jedoch wegen der erforderlichen Umschaltventile in den Zuführungen zu den Angußkanälen auf die Verwendung zweier Komponenten etwa gleicher Viskosität, d.h. im vorliegenden Fall zweier hochviskoser schmelzflüssiger Kunststoffmaterialien, beschränkt - was die gewünschte Material- und Gewichtsersparnis nahezu unmöglich macht - und erfordert außerdem wegen der ständigen Verbindung des Formhohlraums zu den Abführkanälen in jedem Fall eine Kosten erhöhende Oberflächenbehandlung der erzeugten Kunststoffhohlkörper.

Ein anderer Weg wurde mit der Offenbarung der EP-OS 0 289 230 beschritten, die ein Verfahren und eine Vorrichtung zu seiner Durchführung beschreibt, bei dem zunächst der Formhohlraum vollständig mit Kunststoffschmelze gefüllt wird und dann beim Einsetzen des Erstarrens der Kunststoffschmelze an den Wänden des Formhohlraums mittels einer zusätzlichen Düse ein Gas in den Formhohlraum gedrückt wird, um den Innendruck im Formhohlraum bis zur vollständigen Erstarrung des Kunststoffhohlkörpers zur Vermeidung von Einfallstellen an seiner Oberfläche aufrechtzuerhalten. Bei komplizierten Körpern gilt auch hier das bereits vorstehend auf S. 4, Abs. 3 Gesagte - abgesehen davon, daß die offenbarte Konstruktion der Gaseinspritzdüse in jedem Fall eine erhebliche - ggf. kostenaufwendig nachzubearbeitende - Öffnung in der Oberfläche des erzeugten Kunststoffhohlkörpers hinterläßt.

In ähnlicher Weise arbeitet auch ein Verfahren, das in der gegenüber der dem vorliegenden Patent zugrunde liegenden Prioritätsanmeldung in Deutschland nachveröffentlichten Druckschrift WO 90/00466, bei dem ebenfalls zunächst eine vorgegebene Menge von Kunststoffschmelze, die vorzugsweise geringer ist als diejenige zur vollständigen Füllung des jeweiligen Formhohlraums, in den Formhohlraum eingespritzt wird, die dann mittels eines unter Druck stehenden und durch Gaseinlaßdüsen, die in den/die jeweiligen Angußkanal/kanäle oder in die jeweiligen Auslaßbereiche eines Heißkanalsystems einmünden, in die Kunststoffschmelze eingeblasenen Gases, vorzugsweise Stickstoff, zu ihrer endgültigen, durch die Wände des Formhohlraums vorgegebenen Artikelform auseinandergedrückt und bis zu ihrer ausreichenden Erstarrung in diesem Zustand gehalten wird. Im Unterschied zum Gegenstand der vorgenannten Druckschrift EP-PS 0 289 230 weisen die für die Durchführung des hier offenbarten Verfahrens erforderlichen Vorrichtungen allerdings an jedem ihrer Formhohlräume ein oder mehrere Überlaufkammern auf, die über permanente Überlaufkanäle mit dem jeweiligen Formhohlraum verbunden sind und bei jedem Spritzgießvorgang einen Teil der zuvor in den Formhohlraum eingebrachten Kunststoffschmelze, und zwar vorzugsweise denjenigen mit der höchsten Temperatur und damit der niedrigsten Viskosität, aufnehmen. Damit wird erreicht, daß der im Formhohlraum verbleibende Teil der Kunststoffschmelze schneller abkühlt und die Zykluszeit verkürzt wird - unabhängig davon, ob der Inhalt jeder Überlaufkammer, der jeweils mit der Entfernung des erzeugten Kunststoffartikels aus dem Formhohlraum oder unmittelbar anschließend aus dieser entfernt wird, ein gewollter Bestandteil des erzeugten Kunststoffartikels, ein separater und daher abzutrennender Kunststoffartikel, ein abzutrennendes und gegebenenfalls wiederaufarbeitbares Abfallprodukt oder nur der Angriffspunkt einer Einrichtung zur Auslösung eines lokal definierten Wanddurchbruches zur Druckentlastung des Innenraums des erzeugten Kunststoffartikels ist. Bezüglich der vorstehend auf S. 4, Abs. 2 bis S. 5, Abs. 2 im Detail dargelegten zwangsläufigen Einschränkungen bei der Anwendung von mit Unterstützung durch Gasinjektion arbeitenden Kunststoff-Spritzgießverfahren der bis dahin bekannten Art hat jedoch auch das in Rede stehende Verfahren der Druckschrift WO 90/00466 keine Weiterentwicklung ergeben. Weiterhin ist aus der Druckschrift JP 50-74660 ein Verfahren und eine Vorrichtung bekannt, bei dem/der ein Formhohlraum zunächst vollständig mit einer Kunststoffmasse gefüllt wird und danach die noch schmelzflüssige Seele des auf diese Weise hergestellten Formteils durch Einspritzen einer zweiten Kunststoffmasse oder eines Gases über Ventile in Nebenkavitäten ausgetrieben wird. Es geht aus dieser Druckschrift jedoch nicht hervor, wie und an welcher Stelle das Gas eingeblasen wird. Es ist zu vermuten, daß das Gas durch den Angußkanal ins Innere des Formhohlraums eingeblasen wird. Mit einer derartigen Vorrichtung sind somit lediglich Hohlkörper mit sehr einfacher Geometrie herstellbar.

Darüber hinaus muß mit dem Gaseinblasen bereits dann begonnen werden, wenn die an der Formwand bzw. an den Ventilen anstehende Formteiloberfläche noch so plastisch ist, daß die schmelzflüssige Seele des Kunststoffkörpers ihren Weg in die Nebenkavitäten findet.

Der vorliegenden Erfindung liegt daher die Aufgabe zugrunde, ein Verfahren und eine zur Durchführung des Verfahrens geeignete Vorrichtung zur Verfügung zu stellen, mit dem bzw. mit der auch gasgefüllte Kunststoffhohlkörper mit komplizierter geometrischer Form unter Vermeidung der vorgenannten Nachteile hergestellt werden können, d.h. Kunststoffkörper, die auch bei komplizierter geometrischer Form eine - von eventuell vorgesehenen Einlaß- oder Auslaßöffnungen oder deren nachträglichen Verschlüssen abgesehen - einwandfreie Oberfläche, insbesondere ohne Fließmarkierungen, aufweisen, die auch im Falle weniger, verhältnismäßig enger gasgefüllter Hohlräume in einem weitgehend massiven Kunststoffkörper keine Einfallstellen in der Oberfläche zeigen und die in jedem Fall die gasgefüllten Hohlräume an den vorbestimmten Stellen innerhalb des Kunststoffhohlkörpers und mit im wesentlichen reproduzierbarem Volumen einschließen.

Die Lösung dieser Aufgabe erreicht die vorliegende Erfindung mit den Merkmalen der Patentansprüche 1 und 2 bzw. denjenigen der Patentansprüche 10 und 11.

Der besondere Vorteil dieser Erfindung ist darin begründet, daß sie zur Herstellung gasgefüllter Kunststoffhohlkörper zunächst die vollständige Füllung des erforderlichen Formhohlraums im Werkzeug mit druckbeaufschlagter fließfähiger Kunststoffschmelze und das Austreiben der schmelzflüssigen Seele eines solchen Kunststoffhohlkörpers mittels eines ebenfalls druckbeaufschlagten Gases erst dann vorsieht, wenn die am Werkzeug anliegende Oberfläche des Kunststoffhohlkörpers bereits erstarrt ist, so daß diese Oberfläche - bis auf eventuell vorgesehene Einlaß- oder Auslaßöffnungen oder deren nachträgliche Verschlüsse - von vornherein reproduzierbar störungsfrei erzeugt wird.

Ein weiterer bedeutender Vorteil der Erfindung wird dadurch gegeben, daß sie das Anbringen von Düsen zum Einblasen des Gases und von mit entformbaren Nebenkavitäten verbundenen Ausgängen für das Gas an keiner Stelle des Formhohlraums ausschließt, so daß bei jeder geometrisch noch so komplizierten Form des Kunststoffhohlkörpers stets ein oder mehrere Paar(e) aus je einer Gas-Einblasdüse und einem zugehörigen Gas-Ausgang zu einer entformbaren Nebenkavität konstruiert werden kann/können, um Körperbereiche mit größeren Querschnitten mit Gas auszublasen. Dabei kann vorteilhafterweise auch eine einzige Düse mit mehreren Ausgangsöffnungen oder auch eine einzige Ausgangsöffnung mit mehreren Düsen jeweils paarweise zusammenwirken.

Als weiterer Vorteil der Erfindung ist festzustellen, daß sie zumindest in speziellen Fällen die Verwendung der jeweils durch Kunststoff-Einspritzdüse, Angußkanal und Spritzeinheit gebildeten Hohlräume auch als entformbare Nebenkavität(en) zur Aufnahme der ausgeblasenen plastischen Seele des Kunststoffhohlkörpers zuläßt, jedenfalls dann, wenn der Kolben oder die auch kolbenartig arbeitende Schnecke der Spritzeinheit rechtzeitig zurückgezogen, wird. Dabei kann das Austreiben vorteilhafterweise so gefahren werden, 'daß der Rest der auszutreibenden schmelzflüssigen Seele jede Angußöffnung pfropfenartig derart verschließt, daß dabei keine Wanddickenverringerung des Kunststoffhohlkörpers auftritt.

Als vorteilhaft erweist sich im Rahmen der Erfindung außerdem, daß anstelle oder neben der Nutzung des Innenraums von einer oder mehreren Anordnungen von je einem Angußkanal, einer Düse zum Eintragen der Kunststoffschmelze und einer zugehörigen Spritzeinheit auch als entformbare(r) Nebenkavität(en) das Innere von einem oder mehreren außerhalb des Formhohlraums im Werkzeug angeordneten, jedoch mit dem Formhohlraum verbundenen Hohlraum/Hohlräumen als entformbare Nebenkavität(en) verwendet wird, wobei jede dieser Verbindungen mit Mitteln zum willkürlichen Öffnen und Verschließen dieser Verbindungen ausgestattet ist, da auf diese Art und Weise die Flexibilität bezüglich der obengenannten Möglichkeiten zur beliebigen Anpassung von Paaren aus Gas-Einblasdüsen und Gas-Auslaßöffnungen im Formhohlraum erheblich erleichtert und gleichzeitig dafür gesorgt wird, daß der Aufbau der Oberflächenschicht des Kunststoffhohlkörpers, das Ausblasen seiner schmelzflüssigen Seele und das abschließende pfropfenartige Verschließen der Auslaßöffnung(en) mit dem Rest der schmelzflüssigen Seele mit einfachen und leicht steuerbaren Mitteln durchführbar ist.

Weitere vorteilhafte Ausgestaltungen der Erfindung werden insbesondere durch die Merkmale der Unteransprüche 3 bis 9 und 12 bis 16 offenbart.

Beispielhafte Ausführungsformen und Funktionsweisen des Gegenstandes der Erfindung sind in der Zeichnung dargestellt bzw. anhand der Zeichnung näher erläutert.

Es zeigen:
- Fig. 1: Schnitt durch eine schematisch dargestellte erfindungsgemäße Spritzgießmaschine während der vollständigen Füllung des Formhohlraums mit fließfähiger Kunststoffschmelze.
- Fig. 2: Schnitt durch die Spritzgießmaschine der Fig. 1 nach dem Erstarren der Oberfläche des Kunststoffhohlkörpers und während des Austreibens der schmelzflüssigen Seele des Kunststoffkörpers in die aus dem Innenraum des Angußkanals, der Düse und der Spritzeinheit gebildete Nebenkavität.
- Fig. 3: Schnitt A-A aus Fig. 2.
- Fig. 4: Schnitt durch eine schematisch dargestellte erfindungsgemäße Spritzgießmaschine, bei der das Gas die schmelzflüssige Seele des Kunststoffhohlkörpers mittels einer einzigen Düse zum Einspritzen des Gases in mehrere separate, mit dem Formhohlraum verbundene entformbare Nebenkavitäten ausgetrieben hat.
- Fig. 5: Schnitt durch eine schematisch dargestellte erfindungsgemäße Spritzgießmaschine, bei der das Gas die schmelzflüssige Seele des Kunststoffhohlkörpers mittels mehrerer Paare von je einer Düse zum Einspritzen des Gases und je einer zugehörigen entformbaren Nebenkavität aus mehreren definierten Teilbereichen des Kunststoffhohlkörpers austreiben wird.

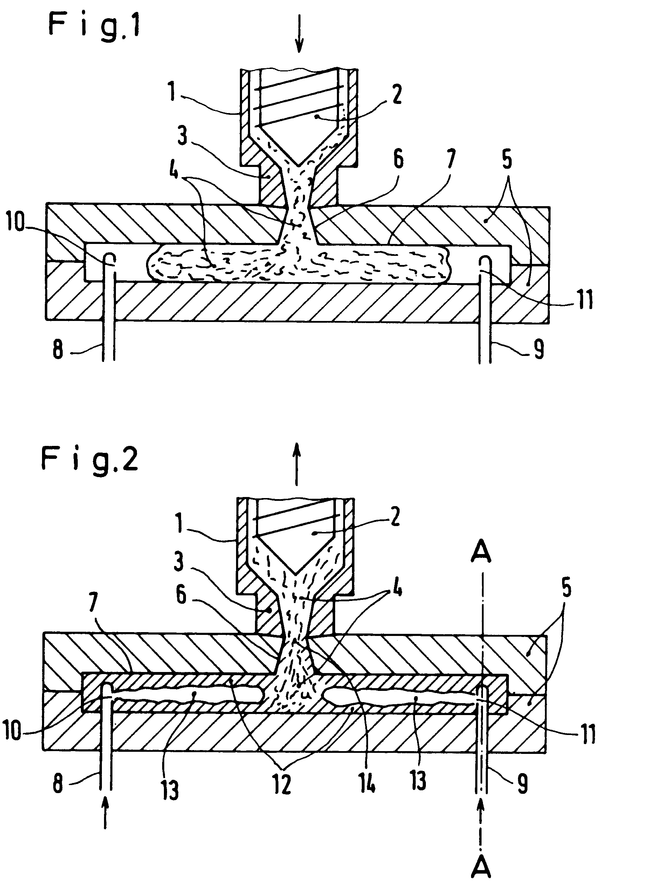

Fig. 1 zeigt in schematischer Darstellung eine erfindungsgemäße Spritzgießmaschine mit einer - nur teilweise dargestellten - Spritzeinheit 1, in der eine Extruderschnecke 2 zur Erzeugung erheblicher Druckänderungen neben einer Rotations- auch eine kolbenartige Bewegung in axialer Richtung ausführen kann, einer Düse 3 zum Einspritzen einer fließfähigen Kunststoffschmelze 4 und ein mehrteiliges - im dargestellten Fall zweiteiliges - Werkzeug 5, das einen Angußkanal 6 und einen Formhohlraum 7 aufweist. Das Werkzeug 5 ist außerdem mit zusätzlichen Düsen 8, 9 zum Einspritzen eines Gases in den zuvor mit fließfähiger Kunststoffschmelze 4 vollständig ausgefüllten Formhohlraum 7 bestückt, wobei diese Düsen 8, 9 in bekannter Art entweder fest mit einem Teil des Werkzeugs verbunden oder in diesem verschiebbar angeordnet sein können.

Die Fig. 1 zeigt die Spritzgießmaschine im noch nicht abgeschlossenen Stadium des vollständigen Füllens des Formhohlraums 7 mit fließfähiger Kunststoffschmelze 4, was insbesondere durch den die Richtung der Axialbewegung der Extruderschnecke 2 markierenden Pfeil über dieser Extruderschnecke 2 angezeigt wird. Die Düsen 8, 9 zum Einspritzen eines Gases, beispielsweise Druckluft oder komprimierter Stickstoff, sind noch nicht von der Kunststoffschmelze 4 eingehüllt. In ihnen wird in diesem Stadium lediglich ein Gasdruck aufrechterhalten, der den Druck im Formhohlraum 7 im Bereich der Düsenöffnungen 10, 11 gerade kompensiert.

Fig. 2 zeigt die Spritzgießmaschine der Fig. 1 in einem späteren Zeitpunkt eines Spritzgießzyklus, in dem der Formhohlraum 7 bereits vollständig mit fließfähiger Kunststoffschmelze 4 aufgefüllt war und die an den Wänden des Formhohlraums 7 anliegende Oberfläche 12 der Kunststoffschmelze 4 bereits erstarrt ist. Zu diesem Zeitpunkt wird einerseits ein druckbeaufschlagtes Gas 13 durch die Düsen 8, 9 in die noch nicht erstarrte fließfähige Kunststoffschmelze 4 in der schmelzflüssigen Seele des entstehenden Kunststoffhohlkörpers eingespritzt, was insbesondere durch die unterhalb der Düsen 8, 9 angebrachten Pfeile symbolisch angezeigt sein soll, und andererseits zur gleichen Zeit die Extruderschnecke 2 gemäß der Richtung des über ihr angebrachten Pfeiles vom Werkzeug 5 weggezogen, so daß im Innenraum von Angußkanal 6, Düse 3 und Spritzeinheit 1 eine außerhalb des Formhohlraums 7 liegende, aber mit ihm verbundene entformbare Nebenkavität 14 zur Aufnahme der auszutreibenden fließfähigen Kunststoffschmelze 4 entsteht. Das Einspritzen des Gases 13 wird spätestens dann abgebrochen, wenn der Rest der auszutreibenden Kunststoffschmelze 4 vor dem Angußkanal 6 einen Pfropfen bildet, der die in seiner Umgebung innerhalb des Formhohlraums 7 bereits vorhandene erstarrte Oberfläche 12 mit mindestens gleicher Wandstärke ergänzt. Nach dem endgültigen Erstarren des erzeugten Kunststoffhohlkörpers und vor dem Öffnen des Werkzeugs kann dann beispielsweise über eine oder beide der Düsen 8, 9 ein Druckausgleich zwischen dem gasgefüllten Innenraum des Kunststoffhohlkörpers und der Atmosphäre erfolgen.

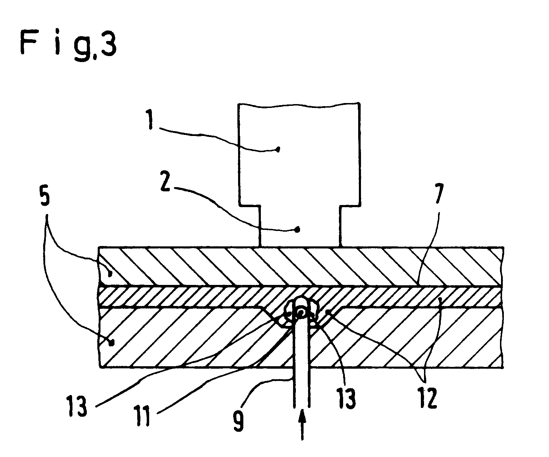

Fig. 3 zeigt den Schnitt A-A der Fig. 2, der voraussetzt, daß der zu erzeugende Kunststoffhohlkörper ein plattenartiges Gebilde mit Verstärkungsrippen ist, wobei die Rippen als Hohlrippen ausgebildet sein sollen. Es kann dabei im Sinne der Erfindung an dieser Stelle dahingestellt bleiben, ob es sich dabei um eine rechteckige Form mit parallel verlaufenden Verstärkungsrippen oder um eine runde oder ovale Form mit radial verlaufenden Rippen handelt. Zu erkennen ist hier zusätzlich zur Fig. 2 insbesondere die Möglichkeit, bei komplizierten geometrischen Formen mittels des erfindungsgemäßen Verfahrens und einer zu seiner Durchführung geeigneten Vorrichtung ausgewählte Bereiche eines zu erzeugenden Kunststoffhohlkörpers für die Füllung mit einem druckbeaufschlagten Gas sehr genau festzulegen.

Das Austreiben der noch fließfähigen Kunststoffschmelze 4 der schmelzflüssigen Seele des Kunststoffhohlkörpers erfolgt in außerhalb des Formhohlraums 7 angeordnete, aber mit ihm verbundene entformbare Nebenkavitäten 18, 19, deren Verbindungen mit dem Formhohlraum 7 mittels kernzugartig betätigbarer Stopfen 20, 21 geöffnet und geschlossen werden können. Sie können nach dem Austreiben der noch fließfähigen Kunststoffschmelze 4 so rechtzeitig und derart geschlossen werden, daß der Rest der Kunststoffschmelze jeweils einen mit der erstarrten Oberfläche 12 des Kunststoffhohlkörpers fluchtenden Pfropfen über den Stopfen 20, 21 bildet, dessen Höhe mindestens der Wandstärke der bereits ausgebildeten erstarrten Oberfläche 12 des Kunststoffhohlkörpers entspricht.

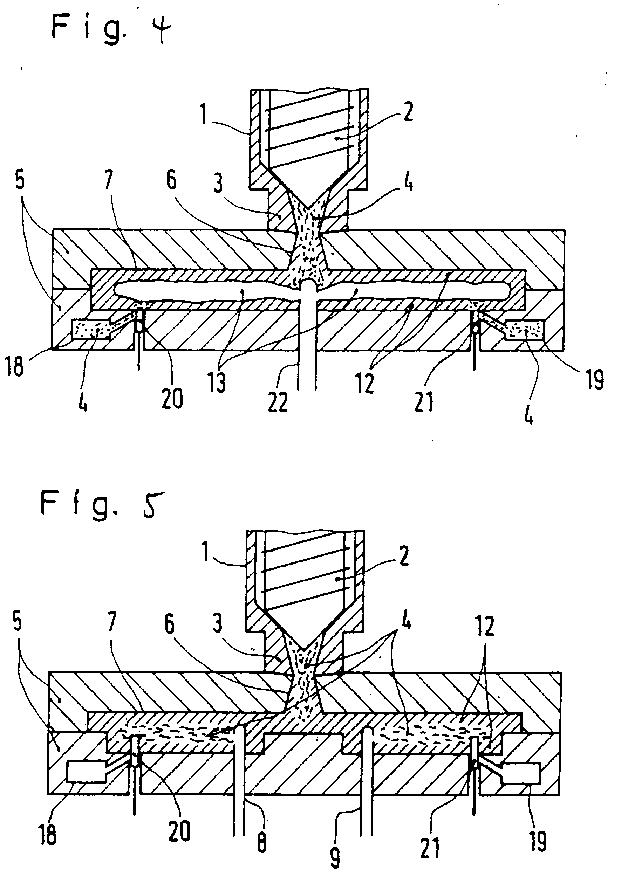

Fig. 4 zeigt ein weiteres Ausführungsbeispiel einer erfindungsgemäßen Spritzgießmaschine, das sich im wesentlichen von den vorangegangenen Ausführungsformen dadurch unterscheidet, daß das Austreiben der noch fließfähigen Kunststoffschmelze 4 mit einer einzigen, separat von der Düse 3 zum Einspritzen fließfähiger Kunststoffschmelze 4 angeordneten Düse 22 zum Einspritzen eines druckbeaufschlagten Gases 13 in mehrere entformbare Nebenkavitäten 18, 19 erfolgt. Dargestellt ist dabei ein Stadium eines Spritzgießzyklus, bei dem das Austreiben der noch fließfähigen Kunststoffschmelze 4 aus der schmelzflüssigen Seele des Kunststoffkörpers gerade abgeschlossen ist. Die Stopfen 20, 21 sind in eine mit der Oberfläche des Formhohlraums 7 fluchtende Verschlußstellung gefahren, mit dem Rest der Kunststoffschmelze 4 wurde über jedem Stopfen 20, 21 ein Pfropfen erzeugt, dessen Höhe der Wandstärke der ihn umgebenden erstarrten Oberfläche 12 des Kunststoffhohlkörpers entspricht.

Fig. 5 stellt demgegenüber ein Ausführungsbeispiel dar, bei dem mittels mehrerer Paare von Düsen 8, 9 zum Einspritzen von druckbeaufschlagtem Gas 13 und jeweils zugehörigen entformbaren Nebenkavitäten 18, 19 gezielt nur einzelne Bereiche eines Kunststoffhohlkörpers, beispielsweise unterbrochene Verstärkungsrippen an einem plattenförmigen Gebilde, mit einer inneren Füllung mit druckbeaufschlagtem Gas 13 versehen werden. Die Spritzgießmaschine ist in einem Stadium eines Spritzgießzyklus dargestellt, in dem die Erstarrung der Oberfläche 12 des Kunststoffhohlkörpers soweit fortgeschritten ist, daß das Austreiben der noch fließfähigen Kunststoffschmelze 4 in die Nebenkavitäten 18, 19 unmittelbar bevorsteht. Die Stopfen 20, 21 stehen noch derart im Formhohlraum 7, daß sie von bereits erstarrtem Material der Oberfläche 12 umgeben sind und beim Freigeben der Verbindungen vom Formhohlraum 7 zu den Nebenkavitäten 18, 19 definierte Öffnungen in der erstarrten Oberfläche 12 erzeugen; der Druck des Gases in den Düsen 8, 9 kompensiert gerade den Druck im Formhohlraum 7 vor den Düsenöffnungen 10, 11. Nach dem Abschluß des Austreibens und dem vollständigen Erstarren des gasgefüllten Kunststoffhohlkörpers und vor dem Öffnen des Werkzeugs 5 kann auch hier - wie in allen vorangegangenen Fällen - beispielsweise über die Düsen 8, 9 zum Einspritzen des druckbeaufschlagten Gases ein Druckausgleich zwischen gasgefülltem Innenraum des Kunststoffhohlkörpers und Atmosphäre durchgeführt werden.

Die dargestellten Ausführungsbeispiele stellen selbstverständlich keine Beschränkung des Schutzumfangs der Patentansprüche dar.

## Patentansprüche

1. Verfahren zum Spritzgießen gasgefüllter Kunststoffhohlkörper, bei dem einerseits durch mindestens eine Düse (3) eine druckbeaufschlagte fließfähige Kunststoffschmelze (4) in das Innere eines durch ein zwei- oder mehrteiliges Werkzeug (5) gebildeten Formhohlraums (7) und andererseits durch mindestens eine weitere Düse (8,9,22) ein druckbeaufschlagtes Gas (13) derart in das Innere der bereits im Formhohlraum (7) befindlichen Kunststoffschmelze (4) eingespritzt wird, daß ein. Teil der Kunststoffschmelze (4) aus dem Hohlraum (7) wieder in mindestens eine außerhalb des Formhohlraums (7) angeordnete und mit diesem verbundene entformbare Nebenkavität (18,19) ausgetrieben wird, wobei der Formhohlraum (7) zunächst vollständig mit Kunststoffschmelze (4) verfüllt wird und erst dann die noch schmelzflüssige Seele des Kunststoffkörpers mittels des Gases (13) in die mindestens eine entformbare Nebenkavität (18,19) ausgetrieben wird, wobei die Verbindungen der Nebenkavitäten (18,19) mit dem Formhohlraum (7) zeitweise abgesperrt werden,
dadurch gekennzeichnet,
daß während des Füllens der Kavität (7) mit Kunststoffschmelze (4) die Verbindungen zu den Nebenkavitäten (18,19) durch in den Formhohlraum (7) hineinreichende Stopfen (20,21) verschlossen wird und nach Erstarrung der am Werkzeug (5) anliegenden Oberfläche des geformten Kunststoffkörpers am Beginn des Einblasvorganges diese Stopfen (20,21) zurückgezogen werden und den Weg zu den Nebenkavitäten (18,19) freigeben, wobei die durch das Gas (13) ausgetriebene noch schmelzflüssige Seele des Kunststoffkörpers in die Nebenkavitäten (18,19) gefördert wird und durch Vorschieben der Stopfen (20,21) Verschlußpfropfen in den Öffnungen des hohlen Kunststoffkörpers gebildet wird, und daß das Einblasen des Gases (13) außerhalb des Angußbereichs (6) erfolgt.

2. Verfahren zum Spritzgießen gasgefüllter Kunststoffhohlkörper, bei dem einerseits durch mindestens eine Düse (3) eine druckbeaufschlagte fließfähige Kunststoffschmelze (4) in das Innere eines durch ein zwei- oder mehrteiliges Werkzeug (5) gebildeten Formhohlraums (7) und andererseits durch mindestens eine weitere Düse (8,9,22) ein druckbeaufschlagtes Gas (13) derart in das Innere der bereits im Formhohlraum (7) befindlichen Kunststoffschmelze (4) eingespritzt wird, daß ein Teil der Kunststoffschmelze (4) aus dem Hohlraum (7) wieder in mindestens eine außerhalb des Formhohlraums (3) angeordnete und mit diesem verbundene entformbare Nebenkavität (14) ausgetrieben wird, wobei der Formhohlraum zunächst vollständig mit Kunststoffschmelze verfüllt wird und erst dann die noch schmelzflüssige Seele des Kunststoffkörpers mittels des Gases (13) in die mindestens eine entformbare Nebenkavität (14) ausgetrieben wird,
dadurch gekennzeichnet,
daß mit dem Austreiben der noch schmelzflüssigen Seele des Kunststoffkörpers erst begonnen wird, wenn die am Werkzeug (5) anliegende Oberfläche bereits erstarrt ist, so daß diese Oberfläche - bis auf eventuell vorgesehene Einlaß- und Auslaßöffnungen - reproduzierbar störungsfrei erzeugt wird, wobei als Nebenkavitäten die von den jeweils durch Kunststoff-Einspritzdüse (3), Angußkanal (6) und Spritzeinheit (1) gebildeten Hohlräume (14) oder Teile davon verwendet werden, dabei der Kolben oder die auch kolbenartig arbeitende Schnecke der Spritzeinheit rechtzeitig zurückgezogen wird und der Rest der auszutreibenden schmelzflüssigen Seele jede Angußöffnung pfropfenartig verschließt, und daß das Einblasen des Gases (13) außerhalb des Angußbereichs erfolgt.

3. Verfahren zum Spritzgießen gasgefüllter Kunststoffhohlkörper nach Anspruch 2,
dadurch gekennzeichnet,
daß die Austreibphase, ggf. unter gleichzeitiger Steuerung des Aufbaus eines Gegendruckprofils der Spritzeinheit(en) (1), so gesteuert wird, daß der Rest der noch schmelzflüssigen Seele des Kunststoffhohlkörpers in jeder Angußöffnung einen Pfropfen erzeugt, der keine merkliche Wanddickenverringerung des Kunststoffhohlkörpers nach Entfernen des Angußzapfens verursacht.

4. Verfahren zum Spritzgießen gasgefüllter Kunststoffhohlkörper nach Anspruch 1,
dadurch gekennzeichnet,
daß jede Verbindung zwischen einer außerhalb der jeweils aus Kunststoff-Einspritzdüse (3,17), Angußkanal (6) und Spritzeinheit (1) gebildeten Hohlräume (14) angeordneten Nebenkavität (18,19) und dem Formhohlraum (7) nur während der Austreibphase und so lange geöffnet wird, daß der Rest der noch schmelzflüssigen Seele des Kunststoffhohlkörpers die jeweilige Austreiböffnung im Kunststoffhohlkörper mit einem Pfropfen aus identischem Material verschließt.

5. Verfahren zum Spritzgießen gasgefüllter Kunststoffhohlkörper nach Anspruch 4,
dadurch gekennzeichnet,
daß jeder Pfropfen aus identischem Material mit der äußeren Oberfläche des Kunststoffhohlkörpers fluchtet und jedenfalls keine merkliche Wanddickenverringerung des Kunststoffhohlkörpers verursacht.

6. Verfahren zum Spritzgießen gasgefüllter Kunststoffhohlkörper nach einem der vorangegangenen Ansprüche 1, 4 oder 5, dadurch gekennzeichnet,
daß die Fließrichtung der Kunststoffschmelze (4) beim Verfüllen des Formhohlraums (7) derjenigen des Gases (13) beim Austreiben der schmelzflüssigen Seele im wesentlichen gleichgerichtet ist.

7. Verfahren zum Spritzgießen gasgefüllter Kunststoffhohlkörper nach einem der vorangegangenen Ansprüche 1 bis 5, dadurch gekennzeichnet,
daß die Fließrichtung der Kunststoffschmelze (4) beim Verfüllen des Formhohlraums (7) derjenigen des Gases (13) beim Austreiben der schmelzflüssigen Seele im wesentlichen entgegengesetzt gerichtet ist.

8. Verfahren zum Spritzgießen gasgefüllter Kunststoffhohlkörper nach einem der vorangegangenen Ansprüche 1 bis 7, dadurch gekennzeichnet,
daß der gasgefüllte Innenraum des Kunststoffhohlkörpers nach dessen Erstarren einem Druckausgleich mit der den Kunststoffhohlkörper umgebenden Atmosphäre ausgesetzt wird.

9. Verfahren zum Spritzgießen gasgefüllter Kunststoffhohlkörper nach einem der vorangegangenen Ansprüche 1 bis 7, dadurch gekennzeichnet,
daß der gasgefüllte Innenraum des Kunststoffhohlkörpers nach dessen Erstarren einem Druck- und Materialaustausch mit der den Kunststoffhohlkörper umgebenden Atmosphäre ausgesetzt wird.

10. Vorrichtung zur Durchführung des Verfahrens nach Anspruch 1, die in einem Werkzeug (5) zum Spritzgießen gasgefüllter Kunststoffkörper im geschlossenen Zustand mindestens einen Formhohlraum (7) enthält, der mit mindestens einer in oder am Werkzeug (5) angeordneten, mit einer vorgeschalteten Spritzeinheit (1) und einem nachgeschalteten Angußkanal (6) verbundenen Düse (3,17) zum Einspritzen von druckbeaufschlagter fließfähiger Kunststoffschmelze (4) sowie mit mindestens einer weiteren, im Werkzeug (5) angeordneten Düse (8,9,16,22) zum Einblasen eines druckbeaufschlagten Gases (13) in das Innere der bereits im Formhohlraum (7) befindlichen Kunststoffschmelze (4) versehen ist, und bei der im oder am Werkzeug (5) außerhalb des Formhohlraums (7) und der Düse(n) (3,17) ein mit dem Formhohlraum (7) verbundener Hohlraum oder mehrere derartige Hohlräume angeordnet ist/sind, dessen/deren Inneres als entformbare Nebenkavitäten (18,19) ausgebildet ist und dessen/deren Verbindungen zum Formhohlraum (7) mit Mitteln zum Öffnen und Verschließen der Verbindung(en) ausgestattet ist/sind, wobei die weitere(n) Düse(n) (8,9,16,22) das druckbeaufschlagte Gas (13) in Richtung auf die Nebenkavitäten (18,19) in die noch schmelzflüssige Seele des Kunststoffkörpers einbläst/einblasen,
dadurch gekennzeichnet,
daß die willkürlich zu öffnende und zu verschließende Absperrung der Verbindung(en) zwischen den Nebenkavitäten (18,19) und dem Formhohlraum (7) durch in das Innere des Formhohlraums (7) hineinschiebbare kernzugartig betätigbare Stopfen (20,21) gebildet ist und die mindestens eine Düse (8,9,22) zum Einspritzen des Gases (13) außerhalb des Angußkanals (6) des Formwerkzeugs (5) angeordnet ist.

11. Vorrichtung zur Durchführung des Verfahrens nach Anspruch 2, die in einem Werkzeug (5) zum Spritzgießen gasgefüllter Kunststoffkörper im geschlossenen Zustand mindestens einen Formhohlraum (7) enthält, der mit mindestens einer in oder am Werkzeug (5) angeordneten, mit einer vorgeschalteten Spritzeinheit (1) und einem nachgeschalteten Ahgußkanal (6) verbundenen Düse (3) zum Einspritzen von druckbeaufschlagter fließfähiger Kunststoffschmelze (4) sowie mit mindestens einer weiteren, im Werkzeug (5) angeordneten Düse (8,9) zum Einblasen eines druckbeaufschlagten Gases (13) in das Innere der bereits im Formhohlraum (7) befindlichen Kunststoffschmelze (4) versehen ist, wobei das druckbeaufschlagte Gas (13) von der/den weiteren Düse(n) (8,9) nach dem Verfüllen des Formhohlraums (7) mit Kunststoffschmelze (4) entgegen der Fließrichtung dieser Kunststoffschmelze (4) beim Verfüllen des Formhohlraums (7) in diesen eingeblasen wird und dabei das Innere der Düse(n) 3 zum Einspritzen der Kunststoffschmelze (4) einschließlich des Inneren des (jeweils) zugehörigen Angußkanals (6) und der (jeweils) zugehörigen Spritzeinheit (1) mittels eines entsprechend gesteuerten Aufbaus eines Gegendruckprofils der Spritzeinheit(en) (1) gefahren wird,
dadurch gekennzeichnet,
daß als entformbare Nebenkavitäten die von den jeweils durch Kunststoff-Einspritzdüse (3), Angußkanal (6) und Spritzeinheit(en) (1) gebildeten Hohlräume oder Teile davon vorgesehen sind und die Absperrung der Verbindungen zwischen diesen Hohlräumen und dem Formhohlraum durch die Einspritzschnecke gebildet wird.

12. Vorrichtung zum Spritzgießen gasgefüllter Kunststoffhohlkörper nach Anspruch 10 oder 11, wobei die Querschnittsfläche jedes Angußkanals (6) der Doppelfunktion als Anguß- und Austreiböffnung angepaßt ist, d.h. im allgemeinen gegenüber einfachem Angußbetrieb vergrößert ist.

13. Vorrichtung zum Spritzgießen gasgefüllter Kunststoffhohlkörper nach Anspruch 10 oder 11, wobei
die zu einem Formhohlraum (7) gehörenden Düsen (3,22) zum Einspritzen der Kunststoffschmelze (4) und zum Einblasen des Gases (13) (jeweils) paarweise eine Anordnung von parallel benachbarten oder gegenüberstehenden Düsen bilden und die durch die Verbindung(en) zu der/den Nebenkavität(en) (18,19) gebildete(n) Austreiböffnung(en) einen im Rahmen der Anforderungen an die Gestalt des Kunststoffhohlkörpers (jeweils) maximalen Abstand zu der/den vorgenannten Anordnung(en) von Düsen (3,22) aufweist/aufweisen.

14. Vorrichtung zum Spritzgießen gasgefüllter Kunststoffhohlkörper nach einem der vorangegangenen Ansprüche 10 bis 13, wobei
die zu einem Formhohlraum (7) gehörende(n) Düse(n) (8,9) zum Einblasen eines druckbeaufschlagten Gases (13) einen im Rahmen der Anforderungen an die Gestalt des Kunststoffhohlkörpers (jeweils) maximalen Abstand zu der/den Düse(n) zum Einspritzen der Kunststoffschmelze (4) in denselben Formhohlraum (7) und zu den gegebenenfalls in der unmittelbaren Nachbarschaft der letztgenannten Düse(n) (3) angeordneten, durch die Verbindung(en) zu einer oder mehreren (weiteren) Nebenkavität(en) (14) gebildeten Austreiböffnung(en) aufweisen.

15. Vorrichtung zum Spritzgießen gasgefüllter Kunststoffhohlkörper nach einem der vorangegangenen Ansprüche 10 bis 14, wobei
die Düse(n) (8,9,22) zum Einblasen eines druckbeaufschlagten Gases (13) bezüglich des Formhohlraums (7) einund ausfahrbar gestaltet sind.

16. Vorrichtung zum Spritzgießen gasgefüllter Kunststoffhohlkörper nach einem der vorangegangenen Ansprüche 10 bis 15, wobei
über die Düse(n) (8,9,16,22) zum Einblasen eines druckbeaufschlagten Gases (13) auch eine Verbindung zwischen dem gasgefüllten Innenraum des Kunststoffhohlkörpers und der den erstarrten Kunststoffhohlkörper umgebenden Atmosphäre herstellbar ist, beispielsweise durch das Freigeben eines direkten Kanals zur Atmosphäre beim Ausfahren einer Düse (8,9,22) aus dem Formhohlraum (7) oder mittels eines bekannten Umschaltventils in der Zuleitung zu einer oder jeder der vorgenannten Düsen (8,9,16,22).

## Claims

1. Process for injection moulding gas-filled plastics blow moulded articles, in which on the one hand a pressurized flowable plastics melt (4) is injected through at least one nozzle (3) into the interior of a mould cavity (7) which is formed by a two-or multi-part mould (5) and on the other hand a pressurized gas (13) is injected through at least one further nozzle (8, 9, 22) into the interior of the plastics melt (4), which is already in the mould cavity (7), such that some of the plastics melt (4) is expelled from the cavity (7) back into at least one secondary cavity (18, 19) which is arranged outside the mould cavity (7), is connected thereto, and can be removed from the mould, the mould cavity (7) first being filled completely with plastics melt (4) and the still molten core of the plastics body only then being expelled by means of the gas (13) into the at least one secondary cavity (18, 19) which may be removed from the mould, the connections between the secondary cavities (18, 19) and the mould cavity (7) at times being blocked, characterized in that, whilst the cavity (7) is being filled with plastics melt (4), the connection to the secondary cavities (18, 19) is closed by stoppers (20, 21) reaching into the mould cavity (7), and once that surface of the moulded plastics body which abuts against the mould (5) has solidified, these stoppers (20, 21) are retracted at the start of the blowing-in procedure and the path to the secondary cavities (18, 19) is freed, the still molten core, which is expelled by the gas (13), of the plastics body being conveyed into the secondary cavities (18, 19) and closing plugs being formed in the openings of the hollow plastics body by pushing forward the stoppers (20, 21), and in that the gas (13) is blown in from outside the sprue region (6).

2. Process for injection moulding gas-filled plastics blow moulded articles, in which on the one hand a pressurized flowable plastics melt (4) is injected through at least one nozzle (3) into the interior of a mould cavity (7) which is formed by a two-or multi-part mould (5) and on the other hand a pressurized gas (13) is injected through at least one further nozzle (8, 9, 22) into the interior of the plastics melt (4), which is already in the mould cavity (7), such that some of the plastics melt (4) is expelled from the cavity (7) back into at least one secondary cavity (14) which is arranged outside the mould cavity (3), is connected thereto, and can be removed from the mould, the mould cavity (7) first being filled completely with plastics melt and the still molten core of the plastics body only then being expelled by means of the gas (13) into the at least one secondary cavity (14) which may be removed from the mould, characterized in that expulsion of the still molten core of the plastics body is only started once the surface abutting against the mould (5) has already solidified, so that this surface - except for any inlet and outlet openings provided - can be produced in reproducibly perfect manner, the cavities (14), or parts thereof, which are formed by the plastics-injecting nozzle (3), the sprue channel (6) and the injection unit (1) respectively being used as secondary cavities, whilst the piston, or the screw working in piston-like manner, of the injection unit is promptly retracted and the rest of the molten core to be expelled closes each sprue opening in plug-like manner, and in that the gas (13) is blown in from outside the sprue region.

3. Process for injection moulding gas-filled plastics blow moulded articles according to Claim 2, characterized in that the expulsion phase is controlled such that, if appropriate while at the same time controlling the build-up of a counter-pressure profile of the injection unit(s) (1), the rest of the still molten core of the plastics blow moulded article produces in each sprue opening a plug which does not bring about any perceptible reduction in the wall thickness of the plastics blow moulded article once the sprue slug has been removed.

4. Process for injection moulding gas-filled plastics blow moulded articles according to Claim 1, characterized in that each connection between a secondary cavity (18, 19), which is arranged outside the cavities (14) formed by the plastics-injecting nozzle (3, 17), the sprue channel (6) and the injection unit (1) respectively, and the mould cavity (7) is only open during the expulsion phase and long enough for the rest of the still molten core of the plastics blow moulded article to close the respective expulsion opening in the plastics blow moulded article by means of a plug of identical material.

5. Process for injection moulding gas-filled plastics blow moulded articles according to Claim 4, characterized in that each plug of identical material is flush with the outer surface of the plastics blow moulded article and in any case does not bring about any perceptible reduction in the wall thickness of the plastics blow moulded article.

6. Process for injection moulding gas-filled plastics blow moulded articles according to one of the preceding Claims 1, 4 or 5, characterized in that the direction of flow of the plastics melt (4) when the mould cavity (7) is being filled is substantially the same as that of the gas (13) when the molten core is being expelled.

7. Process for injection moulding gas-filled plastics blow moulded articles according to one of the preceding Claims 1 to 5, characterized in that the direction of flow of the plastics melt (4) when the mould cavity (7) is being filled is substantially opposed to that of the gas (13) when the molten core is being expelled.

8. Process for injection moulding gas-filled plastics blow moulded articles according to one of the preceding Claims 1 to 7, characterized in that the gas-filled interior of the plastics blow moulded article, once it has solidified, is subjected to a pressure compensation with the atmosphere surrounding the plastics blow moulded article.

9. Process for injection moulding gas-filled plastics blow moulded articles according to one of the preceding Claims 1 to 7, characterized in that the gas-filled interior of the plastics blow moulded article, once it has solidified, is subjected to an exchange of pressure and material with the atmosphere surrounding the plastics blow moulded article.

10. Device for carrying out the process according to Claim 1, which in a mould (5) for injection moulding gas-filled plastics bodies contains in the closed condition at least one mould cavity (7) which is provided with at least one nozzle (3, 1) which is arranged in or on the mould (5) and is connected to an upstream injection unit (1) and a downstream sprue channel (6), for injecting pressurized flowable plastics melt (4), and with at least one further nozzle (8, 9, 16, 22) arranged in the mould (5), for blowing a pressurized gas (13) into the interior of the plastics melt (4) which is already in the mould cavity (7), and in which there is/are arranged in or on the mould (5) outside the mould cavity (7) and the nozzle(s) (3, 17) a cavity connected to the mould cavity (7) or a plurality of such cavities, whereof the interior is constructed as secondary cavities (18, 19) which can be removed from the mould and whereof the connections to the mould cavity (7) is/are equipped with means for opening and closing the connection(s), the further nozzle(s) (8, 9, 16, 22) blowing the pressurized gas (13) in the direction of the secondary cavities (18, 19) into the still molten core of the plastics body, characterized in that the means, to be opened and closed at will, for blocking the connection(s) between the secondary cavities (18, 19) and the mould cavity (7) is formed by stoppers (20, 21) which may be operated in the manner of core pullers and may be pushed into the interior of the mould cavity (7), and the at least one nozzle (8, 9, 22) for injecting the gas (13) is arranged outside the sprue channel (6) of the mould (5).

11. Device for carrying out the process according to Claim 2, which in a mould (5) for injection moulding gas-filled plastics bodies contains in the closed condition at least one mould cavity (7) which is provided with at least one nozzle (3) which is arranged in or on the mould (5) and is connected to an upstream injection unit (1) and a downstream sprue channel (6), for injecting pressurized flowable plastics melt (4), and with at least one further nozzle (8, 9) arranged in the mould (5), for blowing a pressurized gas (13) into the interior of the plastics melt (4) which is already in the mould cavity (7), the pressurized gas (13) being blown by the further nozzle(s) (8, 9), after the mould cavity (7) has been filled with plastics melt (4), into the mould cavity (7) in opposition to the direction of flow of this plastics melt (4) when the mould cavity (7) is being filled, and at the same time the interior of the nozzle(s) (3) for injecting the plastics melt (4), including the interior of the (respectively) associated sprue channel (6) and the (respectively) associated injection unit (1), being driven by means of an appropriately controlled build-up of a counter-pressure profile of the injection unit(s) (1), characterized in that cavities, or parts thereof, which are formed by the plastics-injecting nozzle (3), the sprue channel (6) and the injection unit(s) (1) respectively, are provided as secondary cavities which can be removed from the mould, and the means for blocking the connections between these cavities and the mould cavity are formed by the injection screw.

12. Device for injection moulding gas-filled plastics blow moulded articles according to Claim 10 or 11, the cross-sectional area of each sprue channel (6) being adapted to the double function of sprue and expulsion opening, that is to say being enlarged in general by comparison with the simple sprue operation.

13. Device for injection moulding gas-filled plastics blow moulded articles according to Claim 10 or 11, the nozzles (3, 22) belonging to a mould cavity (7) for injecting the plastics melt (4) and for blowing in the gas (13) forming (in each case) in pairs an arrangement of nozzles which are parallel and adjacent or opposite one another, and the expulsion opening(s) formed by the connection(s) to the secondary cavity (cavities) (18, 19) having a spacing from the above-mentioned arrangement(s) of the nozzle(s) (3, 22) which is (in each case) the maximum within the context of the requirements regarding the shape of the plastics blow moulded article.

14. Device for injection moulding gas-filled plastics blow moulded articles according to one of the preceding Claims 10 to 13, the nozzle(s) (8, 9) belonging to a mould cavity (7) for blowing in a pressurized gas (13) having a spacing from the nozzle(s) for injecting the plastics melt (4) into the same mould cavity (7) and from any expulsion opening(s) which are arranged in the immediate vicinity of the last-mentioned nozzle(s) (3) and which is/are formed by the connection(s) to one or more (further) secondary cavities (14), this spacing being (in each case) the maximum within the context of the requirements regarding the shape of the plastics blow moulded article.

15. Device for injection moulding gas-filled plastics blow moulded articles according to one of the preceding Claims 10 to 14, the nozzle(s) (8, 9, 22) for blowing in a pressurized gas (13) being shaped such that they can be extended and retracted with respect to the mould cavity (7).

16. Device for injection moulding gas-filled plastics blow moulded articles according to one of the preceding Claims 10 to 15, it also being possible to produce by way of the nozzle(s) (8, 9, 16, 22) for blowing in a pressurized gas (13) a connection between the gas-filled interior of the plastics blow moulded article and the atmosphere surrounding the solidified plastics blow moulded article, for example by freeing a direct channel to the atmosphere when a nozzle (8, 9, 22) is extended from the mould cavity (7) or by means of a known switch-over valve in the supply line to one or each of the above-mentioned nozzles (8, 9, 16, 22).

## Revendications

1. Procédé de moulage par injection de pièces creuses en matière plastique remplies de gaz, dans lequel on injecte d'une part, par au moins une filière (3), une matière plastique (4) coulante fondue sous pression dans l'intérieur d'une cavité (7) formée par un moule (5) en deux ou plusieurs parties et, d'autre part, un gaz (13) sous pression, par au moins une filière supplémentaire (8, 9, 22), dans l'intérieur de la matière plastique (4) en fusion déjà contenue dans la cavité (7), une partie de la matière plastique (4) en fusion étant de nouveau expulsée de la cavité (7) vers au moins une cavité secondaire (18, 19) démoulable prévue à l'extérieur de la cavité (7) et communiquant avec celle-ci, la cavité (7) étant d'abord remplie entièrement de matière plastique (4) en fusion et le coeur encore en fusion du corps en matière plastique n'étant expulsé qu'après, au moyen du gaz (13), vers la cavité secondaire (18, 19) démoulable au nombre d'au moins une, les communications entre les cavités secondaires (18, 19) et la cavité (7) étant momentanément interrompues, caractérisé en ce que, durant le remplissage de la cavité (7) avec la matière plastique (4) en fusion, la communication avec les cavités secondaires (18, 19) est fermée par des tampons (20, 21) pénétrant dans la cavité (7) et, après solidification de la surface du corps en matière plastique moulé en contact avec le moule (5), ces tampons (20, 21) sont retirés au début de l'opération d'insufflation et ouvrent la voie vers les cavités secondaires (18, 19), le coeur encore en fusion, expulsé par le gaz (13), du corps en matière plastique étant refoulé dans les cavités secondaires (18, 19) et des bouchons de coulée étant formés dans les orifices du corps creux en matière plastique par introduction des tampons (20, 21), et en ce que l'insufflation de gaz (13) s'effectue à l'extérieur de la zone de carotte (6).

2. Procédé de moulage par injection de pièces creuses en matière plastique remplies de gaz, dans lequel on injecte d'une part, par au moins une filière (3), une matière plastique (4) coulante fondue sous pression dans l'intérieur d'une cavité (7) formée par un moule (5) en deux ou plusieurs parties et, d'autre part, un gaz (13) sous pression, par au moins une filière supplémentaire (8, 9, 22), dans l'intérieur de la matière plastique (4) en fusion déjà contenue dans la cavité (7), une partie de la matière plastique (4) en fusion étant de nouveau expulsée de la cavité (7) vers au moins une cavité secondaire (14) démoulable prévue à l'extérieur de la cavité (7) et communiquant avec celle-ci, la cavité du moule étant d'abord remplie entièrement de matière plastique en fusion et le coeur encore en fusion du corps en matière plastique n'étant expulsé qu'après, au moyen du gaz (13), vers la cavité secondaire (14) démoulable au nombre d'au moins une, caractérisé en ce que l'expulsion du coeur encore en fusion du corps en matière plastique ne commence que lorsque la surface en contact avec le moule (5) est déjà solidifiée, de façon que ladite surface - à l'exception des orifices d'entrée et de sortie éventuellement prévus - soit produite sans anomalie de manière reproductible, les cavités secondaires utilisées étant les cavités (14), ou des parties de celles-ci, formées par la filière d'injection de matière plastique (3), par le canal de carotte (6) et par l'unité d'injection (1), le piston ou la vis sans fin à effet de piston de l'unité d'injection étant retirés à temps, et le reste du coeur en fusion à expulser obturant chaque ouverture d'injection à la manière d'un bouchon, et en ce que l'insufflation du gaz (13) s'effectue à l'extérieur de la zone de carotte.

3. Procédé de moulage par injection de pièces creuses en matière plastique remplies de gaz selon la revendication 2, caractérisé en ce que la phase d'expulsion est commandée, éventuellement avec commande simultanée de l'établissement d'un profil de contre-pression de l'unité (des unités) d'injection (1), de façon que le reste du coeur encore en fusion du corps creux en matière plastique produise dans chaque ouverture d'injection un bouchon qui ne provoque pas une diminution sensible de l'épaisseur de paroi du corps creux en matière plastique après l'extraction de la carotte.

4. Procédé de moulage par injection de pièces creuses en matière plastique remplies de gaz selon la revendication 1, caractérisé en ce que chaque communication entre une cavité secondaire (18, 19), disposée à l'extérieur des cavités (14) formées par la filière d'injection de matière plastique (3, 17), par le canal de carotte (6) et par l'unité d'injection (1), et la cavité (7) du moule n'est ouverte que pendant la phase d'expulsion et le demeure tant que le reste du coeur encore en fusion du corps creux en matière plastique obture l'orifice d'expulsion respectif dans le corps creux en matière plastique avec un bouchon constitué d'une matière identique.

5. Procédé de moulage par injection de pièces creuses en matière plastique remplies de gaz selon la revendication 4, caractérisé en ce que chaque bouchon constitué d'une matière identique est aligné avec la surface extérieure du corps creux en matière plastique et ne provoque en aucun cas une diminution sensible de l'épaisseur de paroi du corps creux en matière plastique.

6. Procédé de moulage par injection de pièces creuses en matière plastique remplies de gaz selon une des revendications précédentes 1, 4 ou 5, caractérisé en ce que, lors du remplissage de la cavité (7) du moule, la direction d'écoulement de la matière plastique en fusion (4) est sensiblement orientée dans le même sens que celle du gaz (13) lors de l'expulsion du coeur en fusion.

7. Procédé de moulage par injection de pièces creuses en matière plastique remplies de gaz selon une des revendications précédentes 1 à 5, caractérisé en ce que, lors du remplissage de la cavité (7) du moule, la direction d'écoulement de la matière plastique en fusion (4) est sensiblement orientée dans le sens opposé à celle du gaz (13) lors de l'expulsion du coeur en fusion.

8. Procédé de moulage par injection de pièces creuses en matière plastique remplies de gaz selon une des revendications précédentes 1 à 7, caractérisé en ce que l'espace intérieur, rempli de gaz, du corps creux en matière plastique est soumis, après la solidification dudit corps creux en matière plastique, à une compensation de pression à l'atmosphère entourant le corps creux en matière plastique.

9. Procédé de moulage par injection de pièces creuses en matière plastique remplies de gaz selon une des revendications précédentes 1 à 7, caractérisé en ce que l'espace intérieur, rempli de gaz, du corps creux en matière plastique est soumis, après la solidification dudit corps creux en matière plastique, à un échange de pression et de matière avec l'atmosphère entourant le corps creux en matière plastique.

10. Dispositif pour la mise en oeuvre du procédé selon la revendication 1, qui, dans un moule (5) pour le moulage par injection de corps en matière plastique remplis de gaz, à l'état fermé dudit moule, comprend au moins une cavité (7), laquelle est munie d'au moins une filière (3, 1) pour l'injection de matière plastique en fusion (4) coulante fondue sous pression placée dans ou sur le moule (5) et communiquant avec une unité d'injection (1) montée en amont et avec un canal de carotte (6) situé en aval, ainsi que d'au moins une autre filière (8, 9, 16, 22) disposée dans le moule (5) et destinée à insuffler un gaz (13) sous pression dans l'intérieur de la matière plastique (4) en fusion déjà contenue dans la cavité (7) du moule, et dans lequel, dans ou sur le moule (5), à l'extérieur de la cavité (7) du moule et de la (des) filière(s) (3, 17), sont prévues une ou plusieurs cavités communiquant avec la cavité (7) du moule, dont l'intérieur est conformé en cavité(s) (18, 19) secondaire(s) démoulable(s) et dont la (les) liaison(s) avec la cavité (7) du moule est/sont équipée(s) de moyens pour l'ouverture et la fermeture de la (des) liaison(s), la (les) filière(s) supplémentaire(s) (8, 9, 16, 22) insufflant le liquide (13) sous pression également en direction des cavités secondaires (18, 19) dans le coeur encore en fusion du corps en matière plastique, caractérisé en ce que les moyens pour l'ouverture et la fermeture intentionnelles de la (des) liaison(s) entre les cavités secondaires (18, 19) et la cavité (7) du moule sont formés par des bouchons (20, 21) qui peuvent être actionnés à la manière d'une traction du coeur et qui peuvent être enfoncés dans l'intérieur de la cavité (7) du moule, et la filière (8, 9, 22), au nombre d'au moins une, destinée à injecter le gaz (13) est disposée à l'extérieur du canal de carotte (6) du moule (5).

11. Dispositif pour la mise en oeuvre du procédé selon la revendication 2, qui, dans un moule (5) pour le moulage par injection de corps en matière plastique remplis de gaz, à l'état fermé dudit mouie, comprend au moins une cavité (7), laquelle est munie d'au moins une filière (3) pour l'injection de matière plastique en fusion (4) coulante fondue sous pression placée dans ou sur le moule (5) et communiquant avec une unité d'injection (1) montée en amont et avec un canal de carotte (6) situé en aval, ainsi que d'au moins une autre filière (8, 9) disposée dans le moule (5) et destinée à insuffler un gaz (13) sous pression dans l'intérieur de la matière plastique (4) en fusion déjà contenue dans la cavité (7) du moule, le gaz (13) sous pression est insufflé dans la cavité (7) du moule par la/les filière(s) (8, 9) supplémentaire (s), après le remplissage de la cavité (7) du mouie avec de la matière plastique <4) en fusion, dans le sens opposé à la direction d'écoulement de ladite matière plastique (4) en fusion, et l'intérieur de la (des) filière(s) (3) pour l'injection de la matière plastique (4) en fusion, y compris l'intérieur du canal de carotte (6) (respectivement) associé et de l'unité d'injection (1) (respectivement) associée, étant utilisé au moyen de la réalisation d'un profil de contre-pression de l'unité (des unités) d'injection (1) commandée de manière adéquate, caractérisé en ce que les cavités secondaires démoulables prévues étant les cavités, ou des parties de celles-ci, formées par la filière d'injection de matière plastique (3), par le canal de carotte (6) et par l'unité (les unités) d'injection (1), et le moyen d'interruption des liaisons entre lesdites cavités et la cavité du moule est formé par la vis d'injection.

12. Procédé de moulage par injection de pièces creuses en matière plastique remplies de gaz selon la revendication 10 ou 11, dans lequel l'aire de la section de chaque canal de carotte (6) est adaptée à la double fonction d'orifice d'injection et d'expulsion, c'est-à-dire généralement agrandie par rapport à la simple fonction d'injection.

13. Procédé de moulage par injection de pièces creuses en matière plastique remplies de gaz selon la revendication 10 ou 11, dans lequel les filières (3, 22) pour l'injection de la matière plastique (4) en fusion et l'insufflation du gaz (13) appartenant à une cavité (7) du moule forment (respectivement) par paire un système de filières parallèles voisines ou situées face à face, et dans lequel le(s) orifice(s) d'expulsion formé(s) par la (les) liaison(s) avec la (les) cavité(s) secondaire(s) (18, 19) présente(nt) (respectivement), dans le cadre des exigences formulées à l'égard de la conformation du corps creux en matière plastique, une distance maximale par rapport au(x) système(s) de filières (3, 22).

14. Procédé de moulage par injection de pièces creuses en matière plastique remplies de gaz selon une des revendications précédentes 10 à 13, dans lequel la (les) filière(s) (8, 9) appartenant à une cavité (7) du moule et destinée(s) à insuffler un gaz (13) sous pression présente(nt) (respectivement), dans le cadre des exigences formulées à l'égard de la conformation du corps creux en matière plastique, une distance maximale par rapport à la (aux) filière(s) pour l'injection de la matière plastique (4) en fusion dans la même cavité (7) du moule et par rapport à l'orifice (aux orifices) d'expulsion disposé(s), le cas échéant, au voisinage immédiat de la (des) filière(s) (3) mentionnées(s) en dernier et formée(s) par la (les) liaison(s) avec une ou plusieurs cavité(s) secondaire(s) supplémentaires (14).

15. Procédé de moulage par injection de pièces creuses en matière plastique remplies de gaz selon une des revendications précédentes 10 à 14, dans lequel la (les) filière(s) (8, 9, 22) pour l'insufflation d'un gaz (13) sous pression peut (peuvent) être entrée(s) et sortie(s) par rapport à la cavité (7) du moule.

16. Procédé de moulage par injection de pièces creuses en matière plastique remplies de gaz selon une des revendications précédentes 10 à 15, dans lequel la (les) filière(s) (8, 9, 16, 22) pour l'insufflation d'un gaz (13) sous pression permet(tent) également d'établir une liaison entre l'espace intérieur du corps creux en matière plastique rempli de gaz et l'atmosphère entourant le corps creux en matière plastique solidifié, par exemple par la libération d'un canal qui communique directement avec l'atmosphère lorsqu'une filière (8, 9, 22) sort de la cavité (7) du moule, ou au moyen d'une soupape d'inversion connue insérée dans l'arrivée d'une filière ou de chacune des filières précitées (8, 9, 16, 22).
